# EUROPÄISCHE PATENTSCHRIFT

(11) **EP 2 277 654 B1**
(45) Veröffentlichungstag und Bekanntmachung des Hinweises auf die Patenterteilung: **12.09.2012**
(21) Anmeldenummer: 09166331.0
(22) Anmeldetag: 24.07.2009
(51) Int. Cl.: B23K 9/028

(54) **Verfahren und Vorrichtung zum Spritzerschutz beim Schweißen von hohlen Werkstücken**
Method and device for protecting against spray when welding hollow workpieces
Procédé et dispositif de protection contre les projections lors du soudage de pièces usinées creuses

(43) Veröffentlichungstag der Anmeldung: 26.01.2011
(73) Patentinhaber: Carl Cloos Schweisstechnik GmbH, 35708 Haiger (DE)
(72) Erfinder: Kunzemann, Ralf, 35687, Dillenburg (DE); Ebener, Wolfgang, 35708, Haiger (DE)
(74) Vertreter: Lippert, Stachow & Partner

(56) Entgegenhaltungen:
- EP-A1- 0 223 059
- DE-A1-102006 033 992
- FR-A- 1 139 837

## Beschreibung

Die Erfindung betrifft ein Verfahren zum Schweißen von hohlen Werkstücken, insbesondere von Rohren, Behältern, Tanks, Kesseln und dergleichen, wobei vorgegebene Abschnitte dieser Werkstücke längs einer bei diesem Verfahren zu bildenden Schweißnaht miteinander verschweißt werden, sowie eine Vorrichtung zur Ausführung dieses Verfahrens.

Ein solches Verfahren -bzw. eine solche Vorrichtung ist in dem Oberbegriff von Anspruch 1 -bzw. von Anspruch 9 beschrieben. DE 10 2006 033992 A1 offenbart ein solches Verfahren und eine solche Vorrichtung.

Bei einer Vielzahl von bekannten Schweißverfahren bilden sich Spritzer aus dem Material der zu verschweißenden Werkstücke und/oder des Zusatzwerkstoffs sowie Schweißrauch durch Verdampfung und/oder Oxidation dieser Materialien. Spritzer und Schweißrauch neigen dazu, sich auf den Werkzeugen und/oder den Werkstücken niederzuschlagen und diese zu verunreinigen. Zumindest bei Werkstücken mit erhöhten Qualitätsansprüchen müssen diese Verunreinigungen durch einen zusätzlichen Arbeitsschritt vom Werkstück entfernt werden. Dieses Nacharbeiten ist besonders schwierig bei hohlen Werkstücken, weil dort die verunreinigte Oberfläche im Allgemeinen nur schwer zugänglich ist.

Die Schweißnaht wird im Allgemeinen so gebildet, dass ein Schweißkopf, der einen Gasbrenner, eine permanente oder abschmelzende Elektrode, eine Werkstoffzuführung, den Lichtauslass einer Laseroptik und/oder den Auslass einer Schutzgaszuführung umfasst, entlang der zu bildenden Schweißnaht (Schweißlinie) oder auch die Schweißlinie unter dem Schweißkopf hindurch geführt wird, wobei die zu verbindenden Abschnitte des Werkstücks durch aufgeschmolzenes und erstarrtes Material aus dem Werkstoff, der Elektrode oder einem weiteren Zusatzwerkstoff verbunden werden. Sind die zu verbindenden Abschnitte plattenförmig, dann kann der Schweißkopf über jeder der beiden Seiten dieser Platten geführt werden. Bei hohlen Werkstückabschnitten befindet sich dagegen der Schweißkopf in der Regel auf der äußeren konvexen Seite. Gleichwohl können Spritzer und Schweißrauch auch auf die Innenseite des Werkstücks gelangen, solange die Schweißnaht noch nicht vollständig geschlossen ist. Insbesondere bei Werkstücken mit stark gekrümmter Fläche, beispielsweise bei Rohren mit geringem Durchmesser, ist die Innenseite für eine Nachbearbeitung nicht zugänglich.

Es sind mehrere Verfahren bekannt, mit denen die Bildung von Spritzern und Schweißrauch sowie auch die Verunreinigung von Werkstück und Schweißgerät beschränkt werden können. Lichtbogen-Schweißverfahren, die eine geringere Neigung zur Spritzerbildung haben sollen, sind Metall-SchutzgasSchweißen (MSG), Laserschweißen, MSG-Laser-Hybridschweißen und Wolfram-Inertgas-Schweißen (WIG).

Auch durch eine spezielle Steuerung des Schweißstroms versucht man beim Lichtbogenschweißen die Spritzerbildung einzuschränken, siehe z.B. DE1440625-B.

Andere Verfahren versuchen, durch eine Gasströmung die Ablagerung von Spritzern auf dem Schweißgerät, insbesondere auf der Optik des Lasers, der Elektrode und der Schutzgaszuführung, zu verhindern, siehe beispielsweise DE29922544-U1; WO97017159-A2.

US5603854-A schlägt vor, zur Verminderung der Spritzer beim Metall-Schutzgas-Lichtbogenschweißen im Schutzgas eine Flüssigkeit, beispielsweise ein Kohlenwasserstoffgemisch, zu dispergieren.

Nach EP0856036-B soll eine Oberfläche vor Spritzern während Schweiß- oder Schleifvorgängen geschützt werden, indem eine höchstens 0,5 mm dicke Schicht abnehmbar, beispielsweise mit Hilfe eines Haftklebers, auf der Oberfläche angebracht wird. Dieses Verfahren lässt sich aber erkennbar auf der Innenfläche hohler Werkstücke allenfalls unter großen Schwierigkeiten anwenden.

Schließlich offenbart DE202006008810-U1 eine Vorrichtung zum Spritzerschutz, bei der Elektrode und Schutzgaszuführung von einer rohrförmigen Abschirmung aus nicht leitfähigem Material umgeben sind, die mit dem Werkstück einen Abzugsspalt für das Schutzgas begrenzt. Diese Vorrichtung ist jedoch nur auf derjenigen Seite des Werkstücks anwendbar, die dem Schweißkopf zugewandt ist.

Es besteht daher ein Bedürfnis nach einem Verfahren und einer Vorrichtung, mit denen sich wirksam verhindern lässt, dass sich Schweißspritzer und Schweißrauch auf der dem Schweißkopf gegenüberliegenden Innenseite eines hohlen Werkstücks niederschlagen.

Die Erfindung stellt sich demgemäß die Aufgabe, ein Verfahren und eine Vorrichtung anzugeben, mit denen eine Verunreinigung der Innenflächen der miteinander verschweißten Abschnitte eines hohlen Werkstücks durch Schweißspritzer und Schweißrauch zuverlässig vermieden wird.

Diese Aufgabe wird durch ein Verfahren nach Anspruch 1 und eine Vorrichtung nach Anspruch 9 gelöst.

Bei dem erfindungsgemäßen Verfahren kann sowohl der Schweißkopf längs der zu bildenden Schweißnaht geführt als auch diese zu bildende Schweißnaht (Schweißlinie) an dem ruhenden Schweißkopf vorbei bewegt werden. Entsprechend wird im ersten Fall der Hohlkörper so mit dem Schweißkopf mitgeführt, dass sich die Öffnung in seiner Mantelfläche stets an der Schweißstelle, d. h. auf der dem Schweißkopf benachbarten Innenfläche der hohlen Werkstückabschnitte befindet. Dagegen bleibt im zweiten Fall der Hohlkörper in einer festen Position gegenüber dem Schweißkopf. Dies bedeutet, dass der Hohlkörper mit der Öffnung in seiner Mantelfläche stets der Relativbewegung des Schweißkopfs zu den Werkstückabschnitten folgt.

Der Begriff "hohl" ist hier nicht auf völlig geschlossene hohle Werkstücke beschränkt. Er soll insbesondere auch solche Werkstücke umfassen, die von einer nur in einer Richtung geschlossenen Fläche begrenzt sind, wie z. B. Rohre, oder Werkstücke, die so stark gewölbt sind, dass ihr Innenraum nach dem Verschweißen nur schwer zugänglich ist. Ein wichtiges Anwendungsgebiet des erfindungsgemäßen Verfahrens ist das Zusammenschweißen von Rohrabschnitten an einer einen Umfang des Rohrs bildenden Schweißlinie, jedoch wird auch die Anwendung beim Herstellen von Rohren und anderen hohlen Werkstücken durch Biegen eines Blechs und Verschweißen längs einer Seitenlinie in Betracht gezogen.

Bei dem erfindungsgemäßen Verfahren werden Schweißspritzer, die durch den noch offenen Spalt zwischen den zu verschweißenden Werkstückabschnitten hindurch in den Innenraum des hohlen Werkstücks eintreten, sicher von dem Hohlkörper aufgefangen. Es ist günstig, wenn die Öffnung in der Mantelfläche des Hohlkörpers möglichst nahe bei der Schweißstelle geführt wird, die sich normalerweise unter dem Schweißkopf befindet. Dabei kann die Mantelfläche an der Innenseite des hohlen Werkstücks anliegen.

Der im erfindungsgemäßen Verfahren verwendete Hohlkörper ist zweckmäßig so gestaltet, dass er sich im Bereich der Schweißstelle an die Innenflächen der zu verschweißenden Werkstückabschnitte anschmiegen, d. h. dieser Innenfläche in einem bestimmten Bereich um die Schweißstelle herum mit geringem Abstand folgen kann. Beispielsweise hat er beim Zusammenschweißen von Rohrabschnitten zweckmäßig eine zylindrische Form, deren Durchmesser etwas kleiner als der Innendurchmesser der Rohrabschnitte ist.

Vorteilhaft wird in dem Hohlkörper eine Gasströmung erzeugt, die Schweißspritzer und Schweißrauch von der Öffnung im Hohlkörper wegbewegt. Bevorzugt ist dieses Gas Luft. Es ist aber natürlich auch möglich, je nach Art des Werkstückmaterials ein anderes Gas, beispielsweise ein Inertgas, zu verwenden. Die Strömung hat vorteilhaft eine Vorzugsrichtung senkrecht zu der Ebene, in der die Schweißlinie an der Schweißstelle liegt, im Falle von Rohren also parallel zur Rohrachse.

Es ist auch möglich, die Gasströmung durch das auf der Schweißkopfseite zugeführte Schutzgas zu erzeugen, wenn man beispielsweise den Brenner über der Außenseite der Werkstückabschnitte abdichtet und so das Schutzgas durch den Spalt zwischen den Abschnitten lenkt.

Zur Erzeugung der Gasströmung im Hohlkörper wird in einer Ausführungsform das Gas unter Überdruck von einer Stirnseite des Hohlkörpers zugeführt. Dabei ist es zweckmäßig, dass das Gas an der anderen Stirnseite des Hohlkörpers und nicht durch die Öffnung in der Mantelfläche abgeführt wird. Hierzu kann an dieser anderen Stirnseite ein Unterdruck angelegt werden. Eine ausreichende Gasströmung wird auch erzeugt, wenn dabei das Gas ohne Überdruck zugeführt wird.

Der Hohlkörper wird bei dem erfindungsgemäßen Verfahren bevorzugt so geführt, dass seine Mantelfläche in der Nähe der Öffnung, d. h. der Schweißstelle, nur einen geringen Abstand zur Innenfläche der zu verschweißenden Werkstückabschnitte hat, beispielsweise 0,1 bis 1 mm. Dadurch wird gewährleistet, dass etwa entstehende Spritzer und Schweißrauch nicht zwischen Hohlkörper und Innenfläche gelangen und die letztere verunreinigen können.

Das erfindungsgemäße Verfahren lässt sich bei der Herstellung beliebiger hohler Werkstücke durch Verschweißen entsprechender hohler Werkstückabschnitte anwenden, beispielsweise Rohre, Behälter, Tanks und dergleichen. Bevorzugt wird es zum Verschweißen von Rohrabschnitten angewendet. Diese können beliebige Querschnitte haben, beispielsweise kreisförmig, quadratisch oder rechteckig. Meist bevorzugt wird es zum Verschweißen zylinderförmiger Rohrabschnitte angewendet.

Die Durchmesser dieser Rohre liegen vorzugsweise im Bereich von 60 bis 220 mm.

Mit dem erfindungsgemäßen Verfahren können auch Werkstückabschnitte miteinander verschweißt werden, die unterschiedliche Wandstärken haben. Wenn dadurch in der Innenfläche des fertigen Werkstücks an der Schweißnaht eine Stufe auftritt, kann dies durch Anpassung der Außenfläche des Hohlkörpers ausgeglichen werden.

Die Erfindung lässt sich besonders vorteilhaft beim MSG-, Laser- oder Laserhybridschweißen anwenden. Insbesondere das Laserhybridschweißen wird bevorzugt, weil durch ein enges Spaltmaß der zu verschweißenden Werkstückabschnitte gekennzeichnet ist, wodurch der Luftaustausch zwischen Außen- und Innenbereich der zu verschweißenden Werkstückabschnitte beschränkt wird. Dabei kann zunächst der enge Spalt an der Wurzel der Schweißnaht mit geringer Dicke geschlossen werden und der nachlaufende MSG-Brenner füllt die Schweißnaht bis zur erforderlichen Stärke auf.

Als Materialien für die Werkstückabschnitte kommen alle in Frage, die sich für die Bearbeitung mit Schweißverfahren eignen, zum Beispiel Eisen, Stahl, Edelstahl, Aluminium sowie Kupfer und Nickel und deren Legierungen.

Mit dem erfindungsgemäßen Verfahren lässt sich die Verunreinigung der Innenwände der hohlen Werkstückabschnitte durch Schweißrauch und Schweißspritzer zuverlässig vermeiden, sodass keinerlei Nachbearbeitung mehr notwendig ist. Die Anwendung des Verfahrens beeinträchtigt dagegen den Schweißprozess selbst nicht, weil es nur auf der Innenseite des Werkstücks angreift.

Die Erfindung umfasst auch eine Vorrichtung zur Durchführung des vorstehend beschriebenen Verfahrens. Die Vorrichtung umfasst einen auf der Außenseite der Werkstückabschnitte positionierbaren Schweißkopf , Mittel zur Bewegung des Schweißkopfs längs der zu bildenden Schweißnaht (Schweißlinie) oder Mittel zur Bewegung der Schweißlinie am Schweißkopf vorbei, einen Hohlkörper mit einer Mantelfläche und zwei Stirnseiten sowie einer Öffnung in der Mantelfläche und Mittel, mit denen der Hohlkörper im Inneren der Werkstückabschnitte so geführt werden kann, dass die Öffnung sich stets an derselben Stelle der Schweißlinie wie der Schweißkopf befindet.

Auf der Außenseite des Hohlkörpers kann an der Stelle der Öffnung eine umlaufende Nut vorgesehen sein, die ggf. einen Überhang der Schweißnaht aufnehmen kann und so das Festklemmen des Hohlkörpers im Werkstück vermeidet. Auch können eine oder mehrere umlaufende Rippen vorgesehen sein, die einen geringen Abstand des Hohlkörpers von der Innenwand des Werkstücks sicherstellen und Festschweißen vermeiden.

Als Mittel für die Führung des Hohlkörpers kommen übliche Positioniereinrichtungen in Frage, wie sie analog auch für die Führung des Schweißkopfs verwendet werden. Wenn der Schweißkopf beim Schweißen längs der Schweißlinie bewegt wird, ist zweckmäßig die Führung des Hohlkörpers mit der Führung des Schweißkopfs gekoppelt, wobei jedoch gegebenenfalls der Hohlkörper auch um seine Achse gedreht werden muss. Wenn beim Schweißen die Werkstückabschnitte bewegt werden und der Schweißkopf in seiner Position verbleibt, kann auch der Hohlkörper an seiner einmal eingestellten Position bleiben. Häufig befindet sich die Schweißstelle dann am höchsten Punkt der Schweißlinie und die Öffnung des Hohlkörpers direkt darunter. Beim Wechsel zu einer anderen Wanddicke der Werkstückabschnitte muss natürlich die Höhe des Hohlkörpers verstellt werden.

Zweckmäßig ermöglicht die Positioniereinrichtung eine Verstellung des Hohlkörpers in drei Richtungen und seine Drehung. Insbesondere ist es vorteilhaft, den Hohlkörper zum Werkstückwechsel aus dem Werkstück hinaus und in das neue Werkstück hinein bewegen zu können.

Die erfindungsgemäße Vorrichtung ist bevorzugt mit Mitteln versehen, mit deren Hilfe in dem Hohlkörper eine Gasströmung erzeugt werden kann. Zu solchen Mitteln gehören beispielsweise eine Eintrittsöffnung für das Gas an der einen und/oder eine Austrittsöffnung an der anderen Stirnseite des Hohlkörpers.

Zur kontrollierten Zuführung des Gases in dem Hohlkörper ist an der einen Stirnseite vorzugsweise ein Endstück vorhanden. Dieses Endstück kann eine Eintrittsöffnung für das Gas von außen, eine Eintrittsdüse für die Einführung des Gases in den Hohlkörper und eine diese beiden verbindende Bohrung aufweisen. Es ist aber auch möglich, dass eine in ihrem Endbereich im Innern des Hohlkörpers verlaufende Zuleitung vorhanden ist, die vor der Innenfläche des Endstücks mündet. In diesem Fall braucht das Endstück keine Bohrung für die Durchleitung des Gases zu umfassen.

Bei beiden Ausführungsformen ist es günstig, wenn das Endstück an der zum Hohlkörper weisenden Innenseite zu einer strömungsleitenden Fläche geformt ist. Das kann beispielsweise eine rotationssymmetrische konkave Fläche sein, etwa eine Kugelkalotte oder ein Kegelmantel. Es ist auch möglich, im Abstand von der Eintrittsdüse ein Prallblech als strömungsleitende Fläche anzubringen.

Die andere Stirnseite des Hohlkörpers kann offen sein, insbesondere wenn der Hohlkörper aus einem der zu verschweißenden Werkstückabschnitte herausragt. Sie kann aber auch auf übliche Weise mit einer Absaugvorrichtung verbunden sein.

Bei einer bevorzugten Ausführungsform der erfindungsgemäßen Vorrichtung ist auf der inneren Mantelfläche stromaufwärts von der Öffnung ein Ableitelement angebracht. Dieses leitet den Gasstrom im Bereich der Innenfläche von dieser weg und verengt den Querschnitt des Hohlkörpers vor der Öffnung. Dadurch entsteht an der Öffnung durch Venturi-Effekt ein zusätzlicher Unterdruck, der die Aufnahme von Spritzern und Schweißrauch im Hohlkörper befördert. Dieses Ableitelement kann beispielsweise ein abgestuftes Blech sein, das an der Innenseite des Hohlkörpers so befestigt ist, dass es nahe bei dem Rand der Öffnung endet. Bei einem zylindrischen Hohlkörper hat es zweckmäßig eine Breite, die etwa 45° (ein Achtel) des Umfangs entspricht.

Die Leitung für die Zuführung des Gases zur einen Stirnseite des Hohlkörpers wird verläuft vorzugsweise längs zu dessen Mantelfläche. Sie kann, beispielsweise auch in einer Längsnut, außen an der Mantelfläche verlaufen und mit ihrem Ende in das Endstück eintreten. Sie kann aber auch in Endbereich in den Hohlkörper hinein geführt sein und vor der Innenfläche des Endstücks enden. Es ist auch möglich, die Zuleitung außen auf der Mantelfläche zu führen, wenn der Spalt zwischen Hohlkörper und Werkstückabschnitten auf der der Schweißstelle gegenüber liegenden Seite ausreichend ist. So lässt sich die Verunreinigung der Leitung durch Schweißspritzer vermeiden. Schließlich kann die Zuleitung auch ganz im Inneren des Hohlkörpers geführt werden. Die Zuleitung kann aus einem üblichen Druckluftschlauch bestehen, wenn sie außerhalb des Hohlkörpers in das Endstück mündet. Verläuft die Leitung, wie beispielsweise für die zweite Ausführungsform beschrieben, in ihrem Endbereich im Inneren des Hohlkörpers, dann wird dieser Endbereich, da er den Schweißspritzern ausgesetzt sein kann, zweckmäßig aus Metall oder hochtemperaturbeständigem Kunststoff gefertigt. Gleiches gilt, wenn die Leitung vollständig im Inneren des Hohlkörpers geführt ist.

Der Hohlkörper hat bevorzugt einen kreisförmigen Querschnitt. Beispielsweise kann er zylinderförmig sein und eignet sich dann insbesondere für das Verschweißen von zylindrischen Rohrprofilen. In diesem Fall kann derselbe Hohlkörper für unterschiedliche Rohrdurchmesser verwendet werden, solange er in diese hineinpasst bzw. so klein ist, dass er sich nicht mehr hinreichend an die Innenwand anschmiegt. Für Werkstückabschnitte mit anderer als Röhrenform können auch Hohlkörper mit anderen Formen verwendet werden, z. B. Kegel, Quader, Kugel, Ellipsoid.

Beim Gebrauch des erfindungsgemäßen Hohlkörpers werden sich im Laufe der Zeit darin Schweißspritzer ansammeln, welche die Funktion stören können. In diesem Fall müsste der Hohlkörper durch einen neuen ersetzt werden. Es ist aber auch möglich, den Hohlkörper mit einem austauschbaren Abschnitt oder Einsatz zu versehen. Dadurch ist es auch leichter möglich, wertvolle Werkstoffe zurückzugewinnen.

Der erfindungsgemäßen Hohlkörper beziehungsweise der austauschbare Abschnitt oder Einsatz kann aus unterschiedlichen Materialien bestehen, vorausgesetzt dass diese durch die Einwirkung der Schweißspritzer nicht zerstört werden oder in Brand geraten. Beispiele sind Eisen, Stahl, Aluminium, Kupfer, hochtemperaturbeständige Kunststoffe. Besonders bevorzugt sind gut wärmeleitende Materialien, wie Kupfer und Aluminium, weil darauf die Schweißspritzer nur wenig haften und leicht entfernt werden können.

Die Erfindung wird nun anhand der beigegebenen Zeichnungen beispielhaft näher erläutert. Es zeigen
- Figur 1: eine erste Ausführungsform einer erfindungsgemäßen Vorrichtung,
- Figur 2: einen Abschnitt A-A aus dieser Ausführungsform der erfindungsgemäßen Vorrichtung im Längsschnitt,
- Figur 3: den erfindungsgemäßen Hohlkörper nach der Ausfüh- rungsform in Figur 2 in perspektivischer Ansicht,
- Figur 4: das Endstück des in Figur 3 gezeigten Hohlkörpers,
- Figur 5: eine zweite Ausführungsform des erfindungsgemäßen Hohlkörpers.

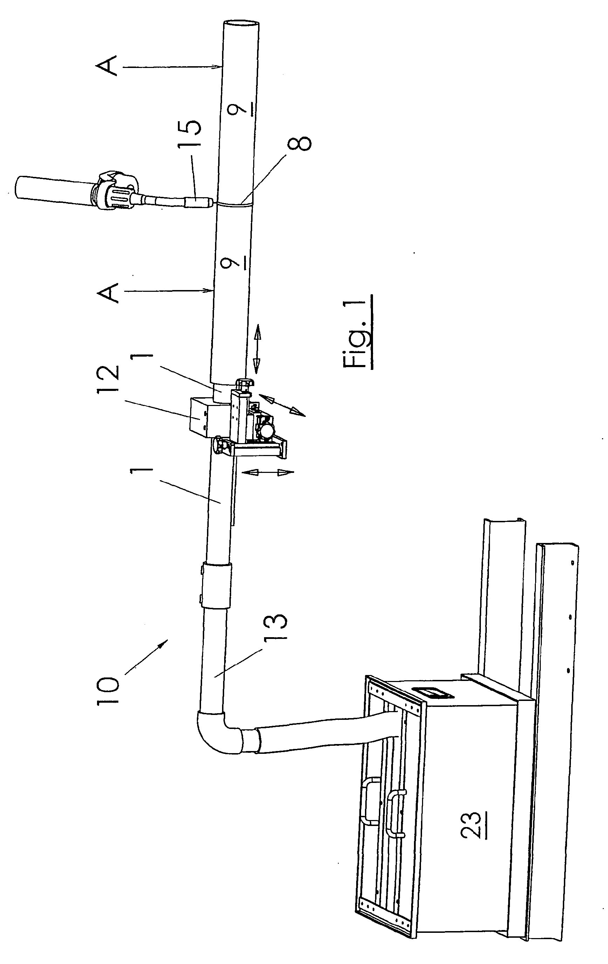

Figur 1 zeigt eine Schweißanlage 10, welche die Verwendung der erfindungsgemäßen Vorrichtung veranschaulicht. Die zu verschweißenden hohlen Werkstückabschnitte sind in diesem Fall zwei zylindrische Rohrabschnitte 9, die so positioniert sind, dass sie längs einer Schweißlinie 8 sich berühren beziehungsweise einen engen Spalt bilden. Die Rohrabschnitte 9 können durch einen (nicht gezeigten) Antrieb synchron um ihre Achse gedreht werden, so dass die Schweißlinie sich am Schweißkopf 15 entlang bewegt. Dabei wird an der Schweißlinie 8 die Schweißnaht erzeugt. In das linke Ende der Rohrabschnitte 9 ist der Hohlkörper 1 eingeführt, der von der Positioniereinrichtung 12 in alle drei Richtungen bewegt und darüber hinaus auch um seine Achse gedreht werden kann. Am Hohlkörper 1 ist der Ableitschlauch 13 angebracht, der zu einem unter Unterdruck stehenden Sammelbehälter 23 führt.

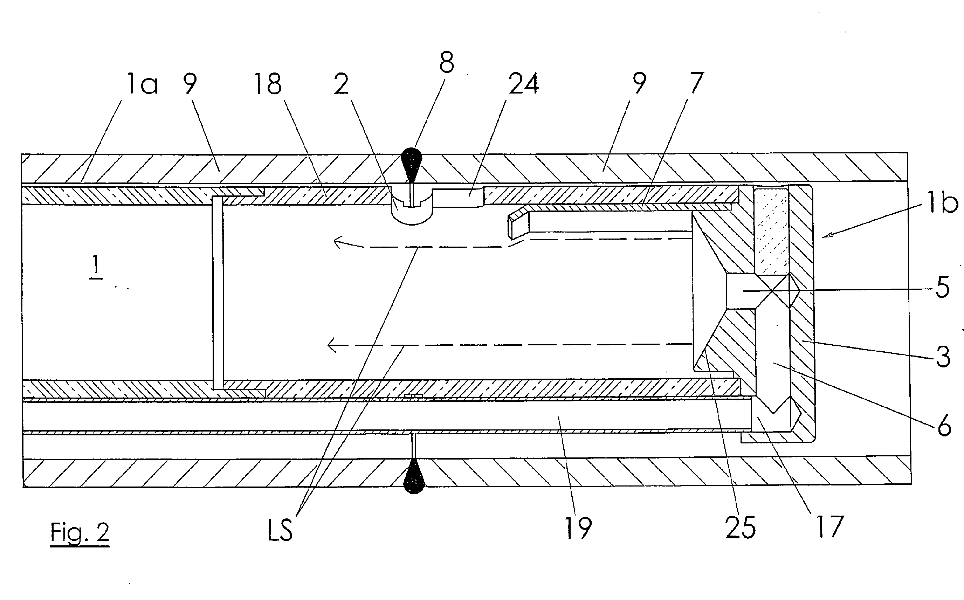

Figur 2 zeigt einen Ausschnitt A-A der erfindungsgemäßen Anordnung im Längsschnitt. Man erkennt wiederum die zu verschweißenden Rohrabschnitte 9 und zwischen diesen die Schweißnaht beziehungsweise Schweißlinie 8. Der Hohlkörper 1, hier in Form eines zylindrischen Rohrs, ist so in die Rohrabschnitte 9 eingeführt, dass seine Öffnung 2 an der Schweißlinie liegt, und zwar dort, wo der Schweißbrenner 15 sich gerade befindet. An einer Stirnseite des Hohlkörpers 1 ist ein Endstück 3 angebracht, das eine Eintrittsöffnung 17 für Druckluft, eine Eintrittsdüse 5 und eine beide verbindende Bohrung 6 aufweist, die hinter der Düse 5 durch einen Stopfen 16 verschlossen ist. Auf der zum Inneren des Hohlkörpers 1 weisenden Seite ist das Endstück 3 zu einer strömungsleitenden Fläche 26, hier kegelstumpfförmig, ausgebildet. Beim Einleiten von Druckluft in die Eintrittsöffnung 17 tritt diese aus der Eintrittsdüse 5 aus und verteilt sich über den Querschnitt des Hohlkörpers 1 zu einer homogenen Luftströmung LS. Durch das Ableitblech 7 wird diese Strömung vor der Öffnung 2 eingeschnürt, wodurch im Bereich der Öffnung ein gegenüber dem übrigen Hohlkörper verminderter Druck herrscht. Dadurch werden Schweißrauch und Spritzer in das Innere des Hohlkörpers gesaugt und vom Luftstrom abgeführt. Das Ableitblech 7 erstreckt sich über etwa 45° des inneren Umfangs des Hohlkörpers erstrecken. In axialer Richtung endet es kurz vor der Öffnung 2. Bei der gezeigten Ausführungsform ist ein Endabschnitt 18 des Hohlkörpers 1 einsteckbar und abnehmbar ausgebildet, so dass er leicht ausgetauscht werden kann. In diesen austauschbaren Einschnitt ist auch das Endstück 3 eingesteckt. Entlang der Mantelfläche des Hohlkörpers 1 ist die Druckluftzuleitung 19 angebracht, die in das Endstück 3 an der Öffnung 17 eintritt.

Im dargestellten Beispiel hat der zylinderförmige Hohlkörper 1 einen Innendurchmesser von etwa 50 - 55 mm und die Druckluftzuleitung 19 einen solchen von 6 - 8 mm. Der Druck in der Leitung beträgt etwa 0,6 MPa. Bei anderen Abmessungen ist ggf. ein anderer Druck zu wählen.

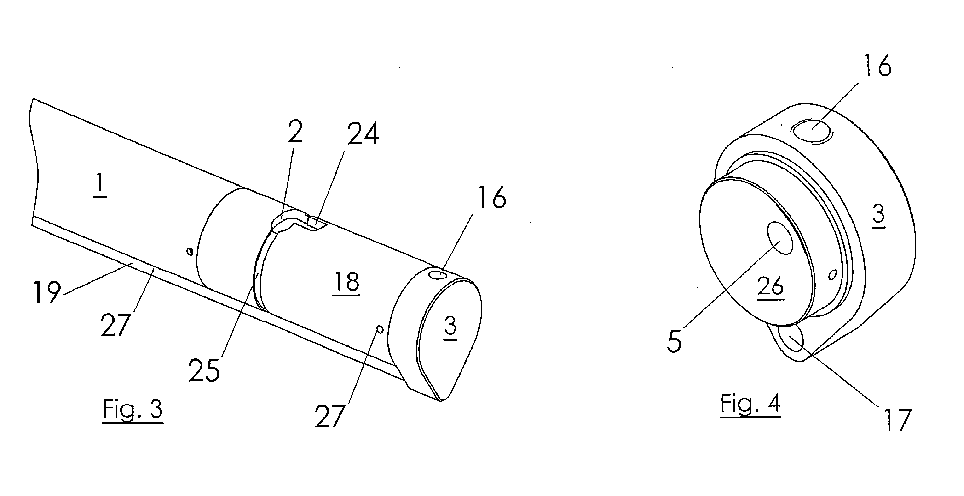

Figur 3 zeigt den erfindungsgemäßen Hohlkörper 1 aus Figur 2 in perspektivischer Ansicht von außen. Man erkennt die Öffnung 2, die etwas breiter als die Schweißnaht ist, sich radial etwa 20° erstreckt und axial mit einer Erweiterung 24 versehen ist, sodass die Öffnung etwa T-förmig erscheint. Außerdem ist noch eine Nut 25 vorhanden, die verhindern soll, dass der relativ zum Werkstück bewegte Hohlkörper an einer geringen Verdickung der Schweißnaht nach innen (Überhang) festklemmt. Die Erweiterung 24 soll die Funktion der erfindungsgemäßen Vorrichtung sicherstellen, wenn die Schweißlinie etwas länger als 360° gewählt wird (Überschweißung mit axialem Versatz). Der austauschbare Abschnitt 18 ist in den Hohlkörper 1 eingesteckt und mit Madenschrauben 27 gesichert. Auf die gleiche Art ist das in den Abschnitt 18 eingesteckte Endstück 3 mit Schrauben 27 gesichert.

Figur 4 ist eine perspektivische Ansicht des Endstücks 3 auf die Innenseite. Man erkennt sie Eintrittsöffnung 17 für die Druckluft, die Eintrittsdüse 5, einen Verschlussstopfen 16 für die Bohrung 6 und die strömungsleitende Fläche 26.

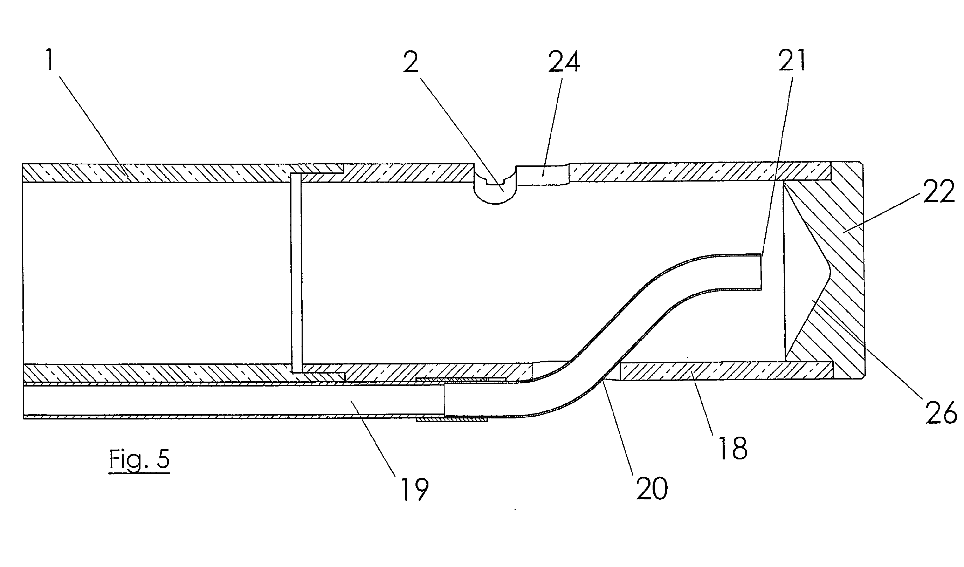

Figur 5 stellt eine weitere Ausführungsform der erfindungsgemäßen Vorrichtung im Längsschnitt dar. Der ersten Ausführungsform entsprechende Bauteile sind hier mit den gleichen Bezugszeichen gekennzeichnet. Bei dieser Ausführungsform wird jedoch die Gasströmung erzeugt, indem ein Gasstrahl auf die strömungsleitenden Fläche 26 im Endstück 22 gerichtet und von dieser umgelenkt wird. Dazu muss die Druckluftzuleitung 19 durch den Mantel des Hohlkörpers 1,18 durchgeführt werden und endet mit der Mündung 21 kurz vor der strömungsleitenden Fläche 26.

### Bezugszeichenliste

- 1: Hohlkörper
- 1a: Mantelfläche des Hohlkörpers
- 1b: Stirnseite des Hohlkörpers
- 2: Öffnung
- 3: Endstück
- 5: Eintrittsdüse
- 6: Verbindungsbohrung
- 7: Ableitblech
- 8: Schweißlinie, Schweißnaht
- 9: Rohrabschnitt
- 10: Schweißanlage
- 12: Positioniereinrichtung
- 13: Ableitschlauch
- 15: Schweißbrenner mit Schweißkopf
- 16: Verschlussstopfen
- 17: Eintrittsöffnung
- 18: Austauschbarer Abschnitt
- 19: Druckluftzuleitung
- 20: Druckluftdurchführung
- 21: Mündung
- 22: Endstück
- 23: Sammelbehälter
- 24: Erweiterung der Öffnung
- 25: Nut
- 26: Strömungsleitende Fläche
- 27: Madenschraube
- LS: Luftströmung

## Patentansprüche

1. Verfahren zum Schweißen von hohlen Werkstücken, wobei ein Schweißkopf längs einer Schweißlinie an der Außenfläche der zu verschweißenden Abschnitte der hohlen Werkstücke geführt oder die zu verschweißenden Abschnitte mit der Schweißlinie am Schweißkopf vorbeigeführt werden, wobei ein Hohlkörper (1) mit einer Mantelfläche (1a) und zwei Stirnseiten (1b) sowie einer Öffnung (2) in der Mantelfläche in das zu schweißende hohle Werkstück eingebracht und entsprechend der Bewegung des Schweißkopfs relativ zu den Werkstückabschnitten mitgeführt wird, **dadurch gekennzeichnet, dass** die Öffnung (2) stets an derselben Stelle der Schweißlinie (8) liegt, dort wo der Schweißkopf (15) sich gerade befindet.

2. Verfahren nach Anspruch 1, **dadurch gekennzeichnet, dass** in dem Hohlkörper eine Gasströmung erzeugt wird.

3. Verfahren nach Anspruch 2, **dadurch gekennzeichnet, dass** das Gas Luft ist.

4. Verfahren nach einem der Ansprüche 2 oder 3, **dadurch gekennzeichnet, dass** das Gas unter Überdruck von einer Stirnseite des Hohlkörpers zugeführt wird.

5. Verfahren nach einem der Ansprüche 2 bis 4, **dadurch gekennzeichnet, dass** das Gas an der anderen Stirnseite des Hohlkörpers abgeführt wird.

6. Verfahren nach einem der Ansprüche 1 bis 5, **dadurch gekennzeichnet, dass** die Mantelfläche des Hohlkörpers zumindest in der Nähe der Öffnung in engem Abstand zur Innenfläche der hohlen Werkstückabschnitte geführt wird.

7. Verfahren nach einem der Ansprüche 1 bis 6, **dadurch gekennzeichnet, dass** die hohlen Werkstückabschnitte zylindrisch sind.

8. Verfahren nach einem der vorangehenden Ansprüche,
**dadurch gekennzeichnet, dass** es ein MSG-, Laser- oder Laserhybridschweißverfahren ist.

9. Vorrichtung zum Schweißen von hohlen Werkstücken durch Zusammenschweißen von Abschnitten (9) der hohlen Werkstücke längs einer, durch eine Schweißlinie festgelegte Schweißnaht, umfassend einen auf der Außenseite der Werkstückabschnitte positionierbaren Schweißkopf (15), Mittel zur Bewegung des Schweißkopfs längs der Schweißnaht (8) oder Mittel zur Bewegung der zu bildenden Schweißnaht (8) am Schweißkopf vorbei, einen Hohlkörper (1, 18) mit einer Mantelfläche (1a) und zwei Stirnseiten (1b) sowie einer Öffnung (2) in der Mantelfläche und Mittel (12), mit denen der Hohlkörper (1) im Inneren der Werkstückabschnitte (9) geführt werden kann, **dadurch gekennzeichnet, dass** die Vorrichtung so ausgebildet ist, dass die Öffnung (2) stets an derselben Stelle der Schweißlinie liegt, dort sich stets an derselben Stelle der Schweißlinie (8) wie der Schweißkopf (15) befindet.

10. Vorrichtung nach Anspruch 9, ferner Mittel umfassend, mit denen im Hohlkörper (1) eine Gasströmung erzeugt werden kann.

11. Vorrichtung nach Anspruch 10, wobei diese Mittel eine Eintrittsöffnung an der einen Stirnseite und/oder eine Austrittsöffnung an der anderen Stirnseite umfassen.

12. Vorrichtung nach einem der Ansprüche 9 bis 11, wobei die eine Stirnseite des Hohlkörpers durch ein Endstück (3) gebildet ist.

13. Vorrichtung nach Anspruch 12, **dadurch gekennzeichnet, dass** das Endstück (3) eine Gaseintrittsöffnung (17), eine Eintrittsdüse (5) und eine beide verbindende Bohrung (6) umfasst.

14. Vorrichtung nach Anspruch 9 oder 10, **dadurch gekennzeichnet, dass** sie an einer Stirnseite des Hohlkörpers ein Endstück (22) und eine vor dessen Innenfläche (26) mündende Zuleitung (19, 21) aufweist.

15. Vorrichtung nach einem der Ansprüche 12 bis 14, **dadurch gekennzeichnet, dass** das Endstück (3, 22) auf der Innenseite eine strömungsleitende Fläche (26) hat.

16. Vorrichtung nach einem der Ansprüche 12 bis 15, **dadurch gekennzeichnet, dass** die andere Stirnseite (1b) des Hohlkörpers (1) offen ist.

17. Vorrichtung nach einem der Ansprüche 10 bis 16, **dadurch gekennzeichnet, dass** auf der inneren Mantelfläche stromaufwärts von der Öffnung ein Ableitelement (7) vorhanden ist.

18. Vorrichtung nach einem der Ansprüche 10 bis 17, ferner eine längs der Mantelfläche (1a) verlaufende Leitung (4, 19) für das den Hohlkörper durchströmende Gas umfassend.

19. Vorrichtung nach Anspruch 18, **dadurch gekennzeichnet, dass** die Leitung (4) außerhalb des Hohlkörpers (1) verläuft.

20. Vorrichtung nach Anspruch 18, **dadurch gekennzeichnet, dass** die Leitung (22) ganz oder teilweise innerhalb des Hohlkörpers (1) verläuft.

21. Vorrichtung einem der Ansprüche 9 bis 20, **dadurch gekennzeichnet, dass** der Hohlkörper (1) einen kreisförmigen Querschnitt hat.

22. Vorrichtung einem der Ansprüche 9 bis 21, **dadurch gekennzeichnet, dass** der Hohlkörper (1) im Bereich der Öffnung (2) einen austauschbaren Abschnitt (18) oder Einsatz hat.

23. Vorrichtung nach einem der Ansprüche 9 bis 22, **dadurch gekennzeichnet, dass** der Hohlkörper (1) oder der austauschbare Abschnitt (18) aus Kupfer besteht.

## Claims

1. Method for welding hollow work pieces, wherein a welding head is guided along a welding line on the outer surface of the hollow work piece sections to be welded together or wherein the sections to be welded together are moved with the welding line past said welding head, a hollow body (1) comprising a lateral surface (1 a) and two front faces (1 b) as well as an opening (2) in said lateral surface being inserted in the hollow work piece to be welded and moved along relative to the work piece sections corresponding to the movement of the welding head, **characterized in that** the opening always lies at the same position of the welding line (8), which is the position where the welding head currently is.

2. Method according to claim 1, **characterized in that** a gas flow is produced in said hollow body.

3. Method according to claim 2, **characterized in that** said gas is air.

4. Method according to one of the claims 2 or 3, **characterized in that** the gas is supplied from a front face of the hollow body under overpressure.

5. Method according to one of the claims 2 to 4, **characterized in that** said gas is discharged at the other front face of the hollow body.

6. Method according to one of the claims 1 to 5, **characterized in that** said lateral surface of the hollow body is guided at a narrow distance to the inner surface of the hollow work piece sections, at least in the vicinity of said hollow work piece sections.

7. Method according to one of the claims 1 to 6, **characterized in that** said hollow work piece sections are cylindrical.

8. Method according to one of the preceding claims, **characterized in that** said method is a MSG, laser or laser hybrid welding method.

9. Apparatus for welding hollow work pieces by welding sections (9) of the hollow work pieces together along a welding seam fixed by a welding line, said apparatus comprising a welding head (15) adapted to be positioned on an outer surface of the work piece sections, means for moving the welding head along the welding seam (8) or means for moving the welding seam (8) to be formed past the welding head, a hollow body (1, 18) with a lateral surface (1a) and with two front faces (1 b) as well as an opening (2) in the lateral surface, and means (12) with which the hollow body (1) can be guided inside the work piece sections (9), **characterized in that** the device is configured in such a manner that the opening (2) always lies at the same position of the welding line, which is the position where the welding head is.

10. Apparatus according to claim 9, further comprising means with which a gas flow can be produced in said hollow body (1).

11. Apparatus according to claim 10, wherein said means comprise an inlet opening at said one front face and/or an outlet opening at the other front face.

12. Apparatus according to one of the claims 9 to 11, wherein said one front face of the hollow body is formed by an end piece (3).

13. Apparatus according to claim 12, **characterized in that** said end piece (3) includes a gas inlet opening (17), an inlet nozzle (5) and an interconnecting bore (6).

14. Apparatus according to claim 9 or 10, **characterized in that** it includes on one front face of said hollow body an end piece (22) and a supply line (19, 21) that terminates before the inner surface (26) thereof.

15. Apparatus according to one of the claims 12 to 14, **characterized in that** the end piece (3, 22) has a flow guide surface (26) on the interior side.

16. Apparatus according to one of the claims 12 to 15, **characterized in that** the other front face (1 b) of said hollow body (1) is open.

17. Apparatus according to one of the claims 10 to 16, **characterized in that** on the inner side of the lateral surface (1a) upstream of the opening a deflection element (7) is provided.

18. Apparatus according to one of the claims 10 to 17, further comprising a passage (4, 19) for the gas flowing through said hollow body, which passage extends along the lateral surface (1a).

19. Apparatus according to claim 18, **characterized in that** said passage (4) extends outside of said hollow body (1).

20. Apparatus according to claim 18, **characterized in that** the passage (22) extends inside of said hollow body (1) fully or partially.

21. Apparatus according to one of the claims 9 to 20, **characterized in that** said hollow body (1) has a circular cross section.

22. Apparatus according to one of the claims 9 to 21, **characterized in that** said hollow body (1) includes an exchangeable section (18) or insert in the region of the opening (2).

23. Apparatus according to one of the claims 9 to 22, **characterized in that** said hollow body (1) or said exchangeable section (18) consist of copper.

## Revendications

1. Procédé pour le soudage de pièces usinées creuses, dans lequel une tête de soudage est guidée le long d'une ligne de soudage sur la surface extérieure de sections à souder des pièces usinées creuses, ou dans lequel les sections à souder sont passées avec la ligne de soudage devant la tête de soudage, un corps creux (1) avec une face latérale (1a) et deux faces frontales (1 b) ainsi qu'un orifice (2) dans la face latérale étant inséré dans la pièce usinée creuse à souder et étant transporté de manière relative aux sections des pièces usinées, conformément au mouvement de la tête de soudage, **caractérisé en ce que** l'orifice (2) est toujours positionné au même lieu de la ligne de soudage (8), lieu où se trouve la tête de soudage (15) à l'instant.

2. Procédé selon la revendication 1, **caractérisé en ce qu'**un courant de gaz est produit dans le corps creux.

3. Procédé selon la revendication 2, **caractérisé en ce que** le gaz est formé d'air.

4. Procédé selon l'une des revendications 2 ou 3, **caractérisé en ce que** le gaz est alimenté d'une face frontale du corps creux sous surpression.

5. Procédé selon l'une des revendications 2 à 4, **caractérisé en ce que** le gaz est évacué à l'autre face frontale du corps creux.

6. Procédé selon l'une des revendications 1 à 5, **caractérisé en ce que** la face latérale du corps creux est guidé à un écart étroit par rapport à la surface intérieure des sections creuses des pièces usinées, au moins près de l'orifice.

7. Procédé selon l'une des revendications 1 à 6, **caractérisé en ce que** les sections creuses des pièces usinées sont cylindriques.

8. Procédé selon l'une des revendications précédentes, **caractérisé en ce que** le procédé est un procédé de soudage à l'arc avec fil- électrode en atmosphère gazeuse (MSG), de soudage laser ou de soudage laser hybride.

9. Dispositif pour le soudage des pièces usinées creuses par le soudage de sections (9) des pièces usinées creuses le long d'une soudure fixée par une ligne de soudage, le dispositif comprenant une tête de soudage (15) qui peut être positionnée sur la surface extérieure des sections des pièces usinées, des moyens pour mouvoir la tête de soudage le long de la soudure (8) ou des moyens pour passer la soudure (8) à former devant la tête de soudage, un corps creux (1, 8) comportant une face latérale (1 a) et deux faces frontales (1 b) ainsi qu'un orifice (2) dans la face latérale et des moyens (12) par lesquels le corps creux (1) peut être guidé dans l'intérieur des sections des pièces usinées (9), **caractérisé en ce que** le dispositif est agencé de sorte que l'orifice (2) est toujours positionné au même lieu de la ligne de soudage, au même lieu de la ligne de soudage (8) que la tête de soudage (15).

10. Dispositif selon la revendication 9, comprenant en outre des moyens par lesquels peut être produit un courant de gaz dans le corps creux (1).

11. Dispositif selon la revendication 10, lesdits moyens comportant un orifice d'entrée sur l'un des fronts et/ou un orifice de sortie sur l'autre front.

12. Dispositif selon l'une des revendications 9 à 11, **caractérisé en ce que** l'un des fronts du corps creux et formé par une extrémité (3).

13. Dispositif selon la revendication 12, **caractérisé en ce que** l'extrémité (3) comporte un orifice d'entrée de gaz (17), une buse d'entrée (5) et un alésage (6) connectant les deux.

14. Dispositif selon la revendication 9 ou 10, **caractérisé en ce qu'**il comporte sur l'un des fronts du corps creux une extrémité (22) et une conduite d'amenée (9, 21) aboutant devant la surface intérieure (26) de ladite extrémité.

15. Dispositif selon l'une des revendications 12 à 14, **caractérisé en ce que** sur la face intérieure l'extrémité (3, 22) comporte une surface de guidage d'écoulement (26).

16. Dispositif selon l'une des revendications 12 à 15, **caractérisé en ce que** l'autre face frontale (1 b) du corps creux (1) est ouverte.

17. Dispositif selon l'une des revendications 10 à 16, **caractérisé en ce que** sur la face latérale intérieure en amont de l'orifice il existe un élément de détour (7).

18. Dispositif selon l'une des revendications 10 à 17, comprenant en outre une conduite (4, 19) pour le gaz traversant le corps creux, ladite conduite s'étendant le long de la face latérale (1a).

19. Dispositif selon la revendication 18, **caractérisé en ce que** la conduite (4) s'étend à l'extérieur du corps creux (1).

20. Dispositif selon la revendication 18, **caractérisé en ce que** la conduite (22) s'étend à l'intérieur du corps creux (1) en tout ou en partie.

21. Dispositif selon l'une des revendications 9 à 20, **caractérisé en ce que** le corps creux (1) a une section transversale circulaire.

22. Dispositif selon l'une des revendications 9 à 21, **caractérisé en ce que** dans la région de l'orifice (2) le corps creux (1) comporte un tronçon échangeable ou un insert.

23. Dispositif selon l'une des revendications 9 à 22, **caractérisé en ce que** le corps creux (1) ou le tronçon échangeable (18) consistent en cuivre.
